# EUROPÄISCHE PATENTSCHRIFT

(11) **EP 3 176 445 B1**
(45) Veröffentlichungstag und Bekanntmachung des Hinweises auf die Patenterteilung: **26.04.2023**
(21) Anmeldenummer: 16198991.8
(22) Anmeldetag: 15.11.2016
(51) Int. Cl.: F16B 5/02, F16B 37/04, F16B 39/30

(54) **VORRICHTUNG ZUR ANBRINGUNG EINES ERSTEN BAUTEILS AN EINEM ZWEITEN BAUTEIL**
DEVICE FOR ATTACHING A FIRST COMPONENT TO A SECOND COMPONENT
DISPOSITIF DESTINÉ À APPLIQUER UN PREMIER COMPOSANT SUR UN SECOND COMPOSANT

(30) Priorität: 01.12.2015 DE 102015120837
(43) Veröffentlichungstag der Anmeldung: 07.06.2017
(73) Patentinhaber: Witte Automotive GmbH, 42551 Velbert (DE)
(72) Erfinder: Erpenbeck, Till, 42555 Velbert (DE)
(74) Vertreter: Manitz Finsterwald Patent- und Rechtsanwaltspartnerschaft mbB

(56) Entgegenhaltungen:
- DE-A1- 2 215 354
- DE-A1- 19 910 511
- DE-A1-102013 109 036
- DE-C1- 4 412 431
- DE-C1- 4 426 785
- DE-U1-202013 009 546

## Beschreibung

Die vorliegende Erfindung betrifft eine Vorrichtung zur Anbringung eines ersten Bauteils an einem zweiten Bauteil mit einem Grundelement, welches ein Gewinde aufweist, das eine Gewindeachse definiert, einem Verbindungsmittel zur direkten oder indirekten form- und/oder stoffschlüssigen Verbindung des Grundelements mit dem zweiten Bauteil und einem Stellelement, das mit dem Grundelement in Gewindeeingriff und mit dem ersten Bauteil in Kontakt steht.

Eine Vorrichtung mit den Merkmalen des Oberbegriffs des Anspruchs 1 ist aus der DE 44 12 431 C1 bekannt. Ferner sind Vorrichtungen zur Überbrückung eines Abstands zwischen zwei Bauteilen in den Druckschriften DE 199 10 511 A1, DE 44 26 785 C1 und DE 10 2013 109 036 A1 offenbart.

Derartige Vorrichtungen dienen vornehmlich dazu, das erste Bauteil und das zweite Bauteil in Richtung der Gewindeachse auf Abstand zu halten bzw. einen Abstand zwischen diesen zu überbrücken. Hierfür befindet sich die Vorrichtung zwischen den beiden Bauteilen, wobei die Vorrichtung einerseits an dem zweiten Bauteil befestigt ist und sich andererseits an dem ersten Bauteil abstützt.

Eine Aufgabe der Erfindung ist es, ein erstes Bauteil an einem zweiten Bauteil derart zu befestigen, dass ein Verstellen der Position des ersten Bauteils relativ zu dem zweiten Bauteil möglich ist, ohne dass die Verbindung zwischen den beiden Bauteilen gelöst werden muss, wobei nach dem Einstellen einer gewünschten Position des ersten Bauteils relativ zu dem zweiten Bauteil ein selbstständiges Verstellen der Position unterbunden ist.

Die vorstehende Aufgabe wird durch eine Vorrichtung mit den Merkmalen des Anspruchs 1 und insbesondere dadurch gelöst, dass das Grundelement und/oder das Stellelement zumindest teilweise derart elastisch verformbar, ausgebildet sind/ist, dass das Stellelement spielfrei mit dem Grundelement in Gewindeeingriff steht und das erste Bauteil spielfrei aufnimmt.

Der Erfindung liegt der allgemeine Gedanke zugrunde, ein erstes Bauteil unter Verwendung der erfindungsgemäßen Vorrichtung derart an einem zweiten Bauteil zu befestigen, dass sich das Stellelement nicht an dem ersten Bauteil abstützt, sondern vielmehr das erste Bauteil spielfrei aufnimmt und somit mit diesem eine bauliche Einheit bildet. Hierdurch ergibt sich der Vorteil, dass das erste Bauteil mit dem zweiten Bauteil verbunden werden kann und trotzdem die Position des ersten Bauteils relativ zu dem zweiten Bauteil ohne Lösen der Verbindung einstellbar bleibt.

Ein weiterer Vorteil der erfindungsgemäßen Vorrichtung besteht darin, dass die Vorrichtung aus nur wenigen Bauteilen besteht, wodurch sie einfach und kostengünstig herstellbar ist. Mit der einfachen Konstruktionsweise geht eine einfache Bedienbarkeit der Vorrichtung einher, indem sich die Position des ersten Bauteils relativ zu dem zweiten Bauteil durch ein einfaches Verdrehen des Stellelements relativ zu dem Grundelement verstellen lässt.

Bei dem ersten Bauteil kann es sich beispielsweise um einen Sensor handeln, der an einem Karosserieteil (zweites Bauteil) eines Kraftfahrzeugs befestigt werden soll. Hierbei ist es vorteilhaft, wenn sich die Position des Sensors relativ zu dem Karosserieteil nach dem Anbringen des Sensors an dem Karosserieteil einstellen lässt, um dadurch beispielsweise den Erfassungsbereich des Sensors optimal auszurichten.

Das erste Bauteil kann aber auch eine Beleuchtungsanordnung sein, die zur Befestigung an einem Karosserieteil (zweites Bauteil) eines Kraftfahrzeugs vorgesehen ist. Mittels der erfindungsgemäßen Vorrichtung lässt sich die Beleuchtungsanordnung an dem Karosserieteil befestigen und hinsichtlich der Abstrahleigenschaften und/oder der optimalen Einbauposition der Beleuchtungsanordnung justieren.

Überdies ist denkbar, dass das erste Bauteil gegenüber dem zweiten Bauteil durch Verdrehen des Stellelements verkippt werden kann, wenn das erste Bauteil zusätzlich an mindestens einer weiteren, zur Vorrichtung beabstandeten, Befestigungsstelle an dem zweiten Bauteil befestigt ist.

Das Grundelement und das Stellelement können jeweils aus einem Kunststoffmaterial gebildet sein, wobei aber auch andere Materialien, wie beispielsweise Metalle, in Betracht kommen, solange diese elastisch verformbar sind. Dabei können sowohl das Grundelement als auch das Stellelement aus demselben Material gefertigt sein. Es ist aber auch möglich, dass das Grundelement und das Stellelement aus jeweils unterschiedlichen Materialien hergestellt sind.

Vorteilhafte Ausbildungen der Erfindung sind den Unteransprüchen, der Beschreibung und den Zeichnungen zu entnehmen.

Um das erste Bauteil auch unter physikalischen Einflüssen, wie beispielsweise Temperaturschwankungen oder Vibrationen, zuverlässig in einer eingestellten Position relativ zum zweiten Bauteil zu fixieren, ist es vorteilhaft, wenn der Gewindeeingriff zwischen Grundelement und Stellelement im zusammengebauten Zustand selbsthemmend ist.

Prinzipiell lässt sich eine Selbsthemmung bei einem Gewindeeingriff durch eine geeignete Abstimmung der jeweiligen Gewindetoleranzen realisieren. Eine Gewindeselbsthemmung lässt sich aber auch dann erreichen, wenn das Grundelement ein Grundelementgewinde und das Stellelement ein Stellelementgewinde umfassen, das Grundelementgewinde und das Stellelementgewinde für einen gegenseitigen Gewindeeingriff ausgelegt sind und im nicht zusammengebauten Zustand der Vorrichtung das Grundelementgewinde im Querschnitt gesehen eine erste Kontur und das Stellelementgewinde im Querschnitt gesehen eine zweite Kontur aufweist, die von der ersten Kontur derart verschieden ist, dass bei konzentrischer Ausrichtung der Konturen mindestens ein radialer Überstand zwischen diesen vorliegt.

Für eine Gewindeselbsthemmung ist es ferner vorteilhaft, wenn im nicht zusammengebauten Zustand der Vorrichtung eine der Konturen bevorzugt nichtkreisförmig, insbesondere oval oder ellipsenähnlich, ist und einen ersten Umfang definiert und die jeweilige andere Kontur im Wesentlichen kreisförmig ist und einen zweiten Umfang definiert. Es erweist sich für einen besonders wirkungsvollen Gewindeeingriff als besonders vorteilhaft, wenn die Differenz der Umfänge möglichst gering ausfällt, insbesondere im Wesentlichen gleich Null ist. Dadurch wird im zusammengebauten Zustand der Vorrichtung zwar eine Verformung, aber allenfalls eine minimale Dehnung oder Kompression des verformbaren Gewindeelements gewährleistet. Insbesondere kann der erste Umfang im Wesentlichen kleiner oder gleich dem zweiten Umfang sein.

Besonders vorteilhaft ist es, wenn im nicht zusammengebauten Zustand der Vorrichtung das Grundelementgewinde eine nichtkreisförmige Kontur aufweist und das Stellelementgewinde eine kreisförmige Kontur aufweist und derart verformbar, insbesondere elastisch verformbar, ausgebildet ist, dass sich die Kontur des Stellelementgewindes im zusammengebauten Zustand der Vorrichtung an die Kontur des Grundelementgewindes anpasst. Selbstverständlich ist aber auch denkbar, dass das Grundelementgewinde eine kreisförmige Kontur und das Stellelementgewinde eine nichtkreisförmige, insbesondere ovale oder ellipsenähnliche, Kontur aufweist.

Trotz Selbsthemmung des Gewindeeingriffs zwischen Grundelement und Stellelement soll ein bewusst herbeigeführtes Verstellen der Position des Stellelements relativ zum Grundelement und somit letztlich der Position des ersten Bauteils relativ zum zweiten Bauteil möglich sein. Hierfür ist es vorteilhaft, wenn zumindest ein Angriffsmerkmal, insbesondere für ein Werkzeug, an dem Stellelement vorgesehen ist, so dass über das Angriffsmerkmal das Stellelement verdreht und somit die Position relativ zum Grundelement verstellt werden kann. Gemäß einer Ausführungsform ist das Angriffsmerkmal an einer äußeren Mantelfläche des Stellelements angeordnet. Das Angriffsmerkmal kann zum Beispiel in Form einer prismatischen, insbesondere einer vier- oder sechseckigen, Außenkontur der äußeren Mantelfläche ausgestaltet sein, so dass zum Zweck der Verdrehung ein Schraubenschlüssel mit dem Angriffsmerkmal in Eingriff gebracht werden kann.

Um neben dem Gewindeeingriff zwischen Grundelement und Stellelement auch die Verbindung zwischen Stellelement und dem davon aufgenommenen ersten Bauteil vor äußeren physikalischen Einflüssen, wie beispielsweise Temperaturschwankungen oder Vibration, zu schützen, ist vorzugsweise mindestens ein Mittel zur form- und/oder kraftschlüssigen Fixierung des ersten Bauteils an dem Stellelement vorgesehen.

Zur axialen Fixierung kann das Stellelement mindestens eine radial nach außen vorspringende Auskragung und mindestens ein radial nach außen vorspringendes Gegenlager aufweisen, wobei die mindestens eine Auskragung und das mindestens eine Gegenlager in Richtung der Gewindeachse mit einem Abstand zueinander angeordnet sind, um das erste Bauteil zumindest annähernd formschlüssig zwischen sich aufzunehmen. Vorteilhafterweise bilden die Auskragung und das Angriffsmerkmal zum Verdrehen des Stellelements eine Einheit.

Zur radialen Fixierung kann wenigstens ein Federelement an dem Stellelement vorgesehen sein, welches durch das aufgenommene erste Bauteil in radialer Richtung entgegen seiner Rückstellkraft verformbar ist. Gemäß einer Ausführungsform kann das Federelement zwischen der Auskragung und dem Federelement angeordnet sein.

Vorteilhafterweise sind mehrere Auskragungen und/oder mehrere Gegenlager und/oder mehrere Federelemente jeweils in Umfangsrichtung um das Stellelement herum verteilt, insbesondere gleichverteilt, angeordnet.

Vorzugsweise ist die Position des Stellelements unabhängig von der Verbindung des Grundelements mit dem zweiten Bauteil verstellbar.

Gemäß einer bevorzugten Ausführungsform ist ein Sockel vorgesehen, welcher an dem zweiten Bauteil drehfest montierbar und mit dem Grundelement formschlüssig in Eingriff bringbar ist. Der Sockel kann dabei stoffschlüssig an dem zweiten Bauteil befestigt werden, zum Beispiel durch Fügen mittels eines organischen oder anorganischen Klebstoffs, durch Löten, durch Schweißen und/oder vergleichbarem. Alternativ kann der Sockel auch einstückig mit dem zweiten Bauteil ausgebildet sein.

Der Formschluss zwischen Grundelement und Sockel lässt sich beispielsweise dadurch herstellen, dass der Sockel eine dem Grundelement zugewandte Stirnfläche umfasst, an welcher wenigstens eine Erhöhung oder Vertiefung ausgebildet ist, und das Grundelement an der Verengung des Durchgangs eine dem Sockel zugewandte Fläche aufweist, an welcher wenigstens eine korrespondierende Vertiefung oder Erhöhung ausgebildet ist.

Ferner kann ein Verbindungsmittel zur Verbindung des Grundelements mit dem zweiten Bauteil oder einem daran montierten Sockel vorgesehen sein, das einen Kopf und einen Schaft umfasst, zum Beispiel eine Schraube oder einen Niet, und das Grundelement und gegebenenfalls der Sockel können einen sich in Richtung der Gewindeachse erstreckenden Durchgang zur Aufnahme des Schafts aufweisen, wobei in dem Durchgang des Grundelements eine Verengung radial nach innen ragt, an deren dem Sockel abgewandten Seite eine Anschlagfläche für den Kopf des Verbindungsmittels ausgebildet ist.

Gemäß einer weiteren Ausführungsform kann das Grundelement an seinem dem zweiten Bauteil zugewandten Ende einen unrunden Fortsatz ausbilden und das zweite Bauteil eine entsprechend geformte Öffnung aufweisen, in welche der unrunde Fortsatz des Grundelements einsetzbar ist.

Neben einer formschlüssigen Verbindung zwischen dem Grundelement und dem zweiten Bauteil ist alternativ oder zusätzlich auch eine direkte oder indirekte stoffschlüssige Verbindung zwischen dem Grundelement und dem zweiten Bauteil denkbar, beispielsweise durch Fügen unter Verwendung eines organischen oder anorganischen Klebstoffs, durch Löten, durch Schweißen und/oder vergleichbarem.

Vorteilhafterweise weist das Grundelement eine Ausdrehsicherung für das Stellelement auf, welche eine Bewegung des Stellelements von dem zweiten Bauteil weg begrenzt. Alternativ oder zusätzlich kann eine Eindrehsicherung vorgesehen sein, welche eine Bewegung des Stellelements auf das zweite Bauteil zu begrenzt.

Gemäß noch einer weiteren Ausführungsform sind zur Verbindung des Grundelements mit dem zweiten Bauteil ein an dem ersten Bauteil ausgebildeter Gewindebolzen und eine auf den Gewindebolzen aufschraubbare Schraubenmutter vorgesehen, wobei die Schraubenmutter in einem sich in Richtung der Gewindeachse erstreckenden Durchgang des Grundelements aufgenommen ist und der Gewindebolzen in einer von dem Durchgang radial nach innen ragenden Verengung aufgenommen ist, so dass die Verengung im zusammengebauten Zustand der Vorrichtung zwischen der Schraubenmutter und dem zweiten Bauteil eingespannt ist.

Vorzugsweise kann zwischen der Verengung und dem Gewindebolzen eine Buchse angeordnet sein, die einen dem zweiten Bauteil zugewandten Flansch aufweist. Der Flansch ist nach außen durch eine Flanschaußenseite begrenzt, wobei vorteilhafterweise die Flanschaußenseite profiliert ist und mit einem komplementär profilierten Ausschnitt in der Verengung formschlüssig in Eingriff steht, um das Grundelement drehfest an dem zweiten Bauteil zu fixieren.

Ferner kann das Stellelement einen inneren Hohlzylinder und einen äußeren Hohlzylinder umfassen, welche die Gewindeachse koaxial umgeben, wobei der innere Hohlzylinder und der äußere Hohlzylinder durch Angriffsmerkmale radial auf Abstand gehalten sind.

Nachfolgend wird die Erfindung rein beispielhaft anhand von möglichen Ausführungsformen unter Bezugnahme auf die beigefügten Zeichnungen beschrieben. Es zeigen:
- Fig. 1: eine Explosionsdarstellung einer erfindungsgemäßen Vorrichtung gemäß einer ersten Ausführungsform;
- Fig. 2: eine Schnittansicht durch die zusammengebaute Vorrichtung von Fig. 1 in einer eingedrehten Endposition des Stellelements;
- Fig. 3: eine Schnittansicht durch die zusammengebaute Vorrichtung von Fig. 1 in einer ausgedrehten Endposition des Stellelements;
- Fig. 4: eine schematische Darstellung der Konturen eines Grundelementgewindes und eines Stellelementgewindes der Vorrichtung von Fig. 1 im nicht zusammengebauten Zustand;
- Fig. 5: eine Detailansicht eines Gewindeeingriffs zwischen dem Grundelementgewinde und dem Stellelementgewinde der Vorrichtung von Fig. 1 im zusammengebauten Zustand;
- Fig. 6: eine perspektivische Ansicht des Grundelements von Fig. 1;
- Fig. 7: eine perspektivische Ansicht eines Stellelements von Fig. 1;
- Fig. 8: eine perspektivische Ansicht einer Variante des Stellelements von Fig. 7;
- Fig. 9: eine partielle Explosionsdarstellung einer erfindungsgemäßen Vorrichtung gemäß einer zweiten Ausführungsform;
- Fig. 10: eine Explosionsdarstellung einer erfindungsgemäßen Vorrichtung gemäß einer dritten Ausführungsform;
- Fig. 11: eine perspektivische Ansicht der teilweise zusammengebauten Vorrichtung von Fig. 10 in einer Vormontagestellung;
- Fig. 12: eine perspektivische Ansicht der teilweise zusammengebauten Vorrichtung von Fig. 10 in einer Endmontagestellung;
- Fig. 13: eine Explosionsdarstellung einer erfindungsgemäßen Vorrichtung gemäß einer vierten Ausführungsform; und
- Fig. 14: eine Teilschnittansicht der Vorrichtung von Fig. 13 im zusammengebauten Zustand.

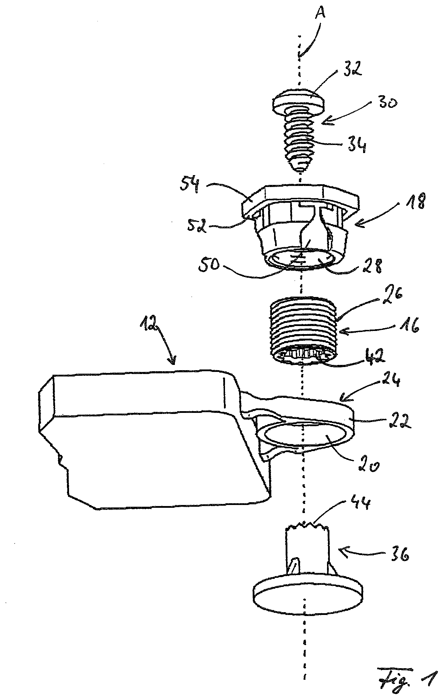

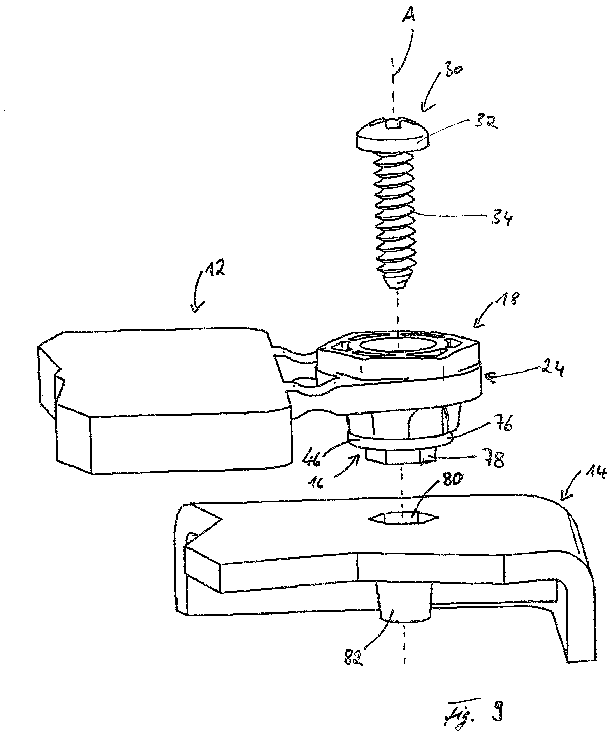

Fig. 1 zeigt eine Explosionsdarstellung einer ersten Ausführungsform einer erfindungsgemäßen Vorrichtung zur Anbringung eines ersten Bauteils 12, hier eines Sensors, an einem zweiten Bauteil 14 (siehe Fig. 9), zum Beispiel einem Karosserieteil eines Kraftfahrzeugs. Die Vorrichtung umfasst ein Grundelement 16 und ein Stellelement 18. Das erste Bauteil 12 wird von dem Stellelement 18 aufgenommen, wie exemplarisch in Fig. 9 gezeigt ist. Hierfür weist das erste Bauteil 12 eine Aussparung 20 auf, die durch eine Wandung 22 definiert ist, welche, wie in Fig. 1 dargestellt, an dem ersten Bauteil 12 einen hervorstehenden Teil 24 bildet.

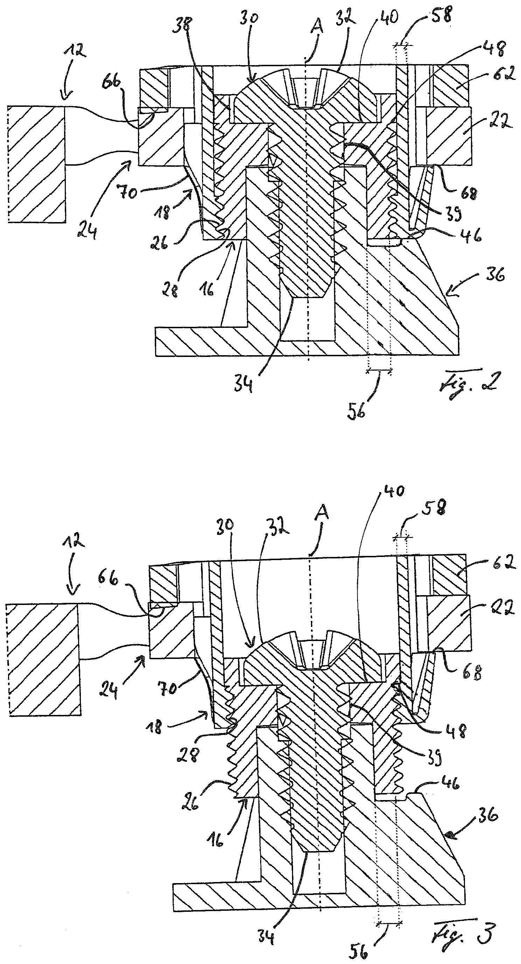

Das Grundelement 16 ist an seiner Außenseite mit einem Grundelementgewinde 26 versehen, das eine Gewindeachse A definiert. Das Stellelement 18 ist nach Art einer Schraubenmutter ausgebildet und weist an seiner Innenseite ein Stellelementgewinde 28 auf. Im zusammengebauten Zustand steht das Grundelement 16 mit dem Stellelement 18 über das Grundelementgewinde 26 und das Stellelementgewinde 28 in Gewindeeingriff, wie beispielsweise in Fig. 2 und 3 gezeigt ist. Prinzipiell kann zu diesem Zweck das Grundelement 16 auch ein Innengewinde und das Stellelement 18 ein Außengewinde aufweisen.

Die Vorrichtung umfasst zudem ein Verbindungsmittel 30, das bei der in Fig. 1 dargestellten Ausführungsform eine Schraube ist, die einen Kopf 32 und einen Schaft 34 aufweist. Das Verbindungsmittel 30 dient zur Fixierung des Grundelements 16 an dem zweiten Bauteil 14, wobei, wie in Fig. 1 zu erkennen ist, die Fixierung indirekt über einen Sockel 36 erfolgt, der wiederum durch Fügen mittels Klebstoff, Löten oder Schweißen mit dem zweiten Bauteil 14 stoffschlüssig verbunden sein kann. Alternativ kann der Sockel 36 auch einstückig mit dem zweiten Bauteil 14 ausgebildet sein. Grundsätzlich ist es auch denkbar, anstatt einer Schraube einen Niet als Verbindungsmittel 30 zu verwenden.

Wie Fig. 2 und 3 zeigen, weist das Grundelement 16 einen axialen Durchgang 38 und darin eine radial nach innen ragende Verengung 39 auf, die auf der dem Sockel 36 abgewandten Seite eine Anschlagfläche 40 ausbildet, an der das schaftseitige Ende des Kopfes 32 des Verbindungsmittels 30 im zusammengebauten Zustand anliegt und das Grundelement 16 somit axial an dem Sockel 36 fixiert.

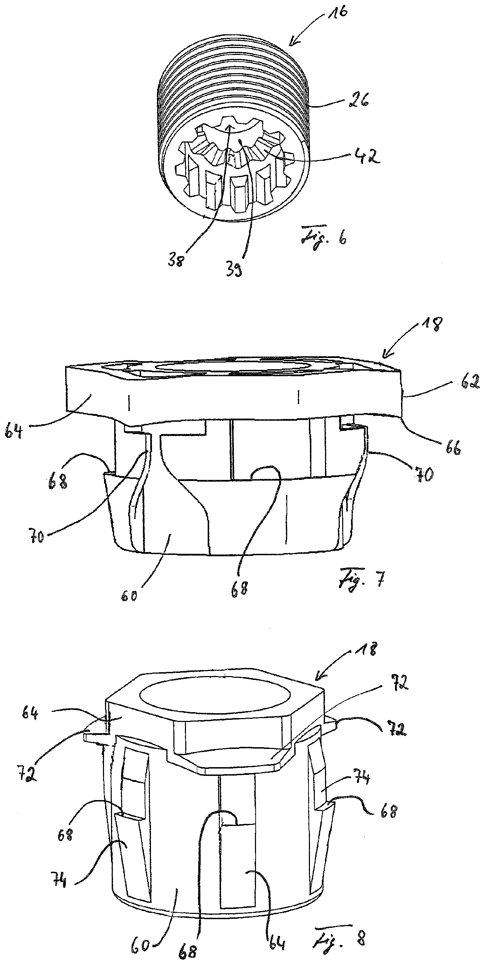

Die Verbindung von Grundelement 16 und Sockel 36 ist außerdem drehfest gegenüber einer Rotation um die Gewindeachse A, indem mehrere Vertiefungen und Erhöhungen 42, die an einer dem Sockel 36 zugewandten Fläche der Verengung 39 des Durchgangs 38 des Grundelements 16 angeordnet sind (Fig. 6), in dazu komplementäre Erhöhungen und Vertiefungen 44, die an der dem Grundelement 16 zugewandten Stirnfläche des Sockels 36 angeordnet sind (Fig. 1), formschlüssig eingreifen. Bevorzugt sind die Erhöhungen und Vertiefungen 42, 44 in Umfangsrichtung gesehen gleichverteilt angeordnet.

Alternativ könnte das Grundelement 16 auch ohne Sockel 36 direkt stoffschlüssig an dem zweiten Bauteil 14 angebracht sein, beispielsweise durch Fügen mittels Klebstoff, Löten oder Schweißen.

Fig. 2 zeigt das Stellelement 18 in einer vollständig eingedrehten Position und Fig. 3 zeigt das Stellelement 18 in einer vollständig ausgedrehten Position. Die vollständig eingedrehte und vollständig ausgedrehte Position definieren einen Stellweg, der vorzugsweise mindestens 4 mm beträgt. Damit das Stellelement 18 beim Eindrehen nicht über das Grundelement 16 hinaus verdreht werden kann, ist an dem Sockel 36 ein Eindrehschutz 46 in Form einer Schulter vorgesehen, an dem das dem zweiten Bauteil 14 zugewandte Ende des Stellelements 18 in der vollständig eingedrehten Position anschlägt. Ebenso ist ein Ausdrehschutz 48 an dem Grundelement 16 vorgesehen, an dem das dem zweiten Bauteil 14 abgewandte Ende des Stellelementgewindes 28 in der vollständig ausgedrehten Position anschlägt und somit das Stellelement 18 vor Ausdrehung aus dem Grundelement 16 bewahrt.

Es gestaltet sich als vorteilhaft, wenn sich das Stellelement 18 nicht selbsttätig relativ zu dem Grundelement 16 verdrehen kann und der Gewindeeingriff zwischen Stellelement 18 und Grundelement 16 unempfindlich gegenüber äußeren physikalischen Einflüssen ist, wie beispielsweise Vibrationen oder Temperaturschwankungen. Dies wird durch eine Gewindeselbsthemmung zwischen dem Grundelementgewinde 26 und dem Stellelementgewinde 28 erreicht, wie nachfolgend erläutert wird.

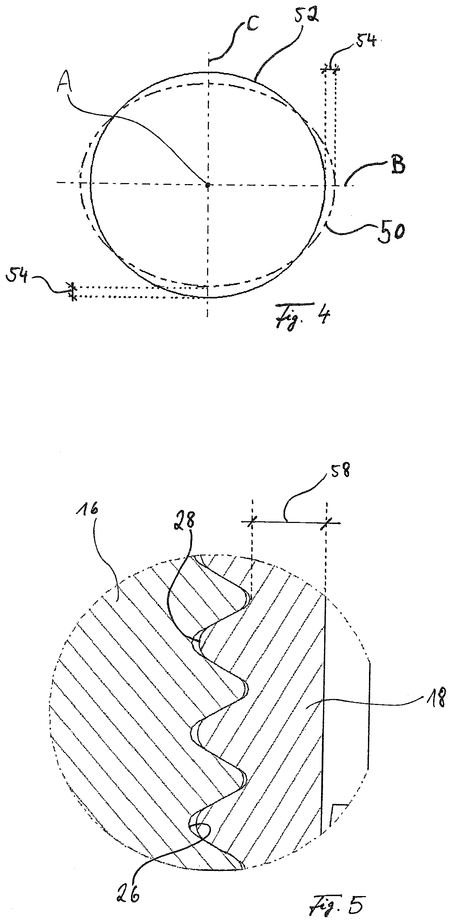

Im nicht zusammengebauten Zustand weist das Grundelementgewinde 26 in einer zur Gewindeachse A senkrechten Ebene eine erste Kontur 50 und einen ersten Umfang auf, und das Stellelementgewinde 28 weist in einer zur Gewindeachse A senkrechten Ebene eine zweite Kontur 52 und einen zweiten Umfang auf. Dabei unterscheiden sich die beiden Konturen 50,52 im nicht zusammengebauten Zustand derart, dass zwischen diesen mindestens ein radialer Überstand 54 vorliegt (Fig. 4).

In Fig. 4 ist eine bevorzugte Ausführungsform dargestellt, bei der das Stellelementgewinde 28 eine im Wesentlichen kreisförmige Kontur 52 aufweist, wohingegen die Kontur 50 des Grundelementgewindes 26 nicht kreisförmig, sondern oval oder ellipsenähnlich ausgebildet ist. Die in Fig. 4 dargestellten Konturen 50,52 liegen in einer Ebene, die durch zwei Achsen B und C aufgespannt wird, wobei die Achse B und die Achse C senkrecht zueinander und senkrecht zur Gewindeachse A ausgerichtet sind und wobei die Gewindeachse A durch den Schnittpunkt der beiden Achsen B und C verläuft. In Richtung der Achse B weist die ovale oder ellipsenförmige Kontur 50 des Grundelementgewindes 26 gegenüber der im Wesentlichen kreisförmigen Kontur 52 des Stellelementgewindes 28 einen radialen Überstand 54 auf. Dahingegen liegt in Richtung der Achse C ein radialer Überstand 54 der im Wesentlichen kreisförmigen Kontur 52 des Stellelements 18 gegenüber der ovalen oder ellipsenähnlichen Kontur 50 des Grundelements 16 vor.

Für eine effektive Gewindeselbsthemmung ist entscheidend, dass der Umfang der ersten Kontur 50, d.h. also des Grundelementgewindes 26, kleiner oder gleich dem Umfang der zweiten Kontur 52, d.h. also des Stellelementgewindes 28 ist, wobei der Gewindeeingriff besonders dann wirkungsvoll ist, wenn die Differenz der beiden Umfänge möglichst gering ausfällt und vorzugsweise gleich Null ist. Eine Gewindeselbsthemmung entsteht letztlich dadurch, dass sich im zusammengebauten Zustand wenigstens eine der Konturen 50,52 unter Verspannung von Grundelement 16 und/oder Stellelement 18 der anderen anpasst, wobei die Anpassungsfähigkeit von den Wanddicken des Stellelements 18 und des Grundelements 16 abhängt.

Anhand von Fig. 2 oder 3 ist zu erkennen, dass hier die Wanddicke 56 des Grundelements 16 stärker ausfällt als die Wanddicke 58 des Stellelements 18. Demnach ist das Stellelement 18 gegenüber dem stärkeren Grundelement 16 leichter deformierbar, so dass sich die Kontur 52 des Stellelementgewindes 28 im zusammengebauten Zustand der Vorrichtung der Kontur 50 des Grundelementgewindes 26 anpasst. Es ist aber auch möglich, dass umgekehrt das Grundelement 16 eine geringere Wanddicke als das Stellelement 18 aufweist und sich im zusammengebauten Zustand der Vorrichtung folglich die Kontur 50 des Grundelementgewindes 26 der Kontur 52 des Stellelementgewindes 28 anpasst. Vorzugsweise ist die Deformation des schwächeren Elements elastisch.

Wie in Fig. 5 ersichtlich ist, greifen im zusammengebauten Zustand der Vorrichtung das Grundelementgewinde 26 und das Stellelementgewinde 28 in Folge der Verformung des schwächeren Elements spielfrei ineinander, so dass das Grundelementgewinde 26 und das Stellelementgewinde 28 im zusammengebauten Zustand der Vorrichtung form- und kraftschlüssig in Eingriff stehen und die resultierende Gewindeselbsthemmung dauerhaft sichergestellt ist.

Vorteilhafterweise ist nicht nur der Gewindeeingriff zwischen dem Grundelement 16 und dem Stellelement 18 unempfindlich gegenüber äußeren physikalischen Einflüssen, wie beispielsweise Vibrationen oder Temperaturschwankungen, sondern auch die Aufnahme des ersten Bauteils 12 durch das Stellelement 18, wie nachfolgend erläutert wird.

Wie Fig. 7 zeigt, weist das Stellelement 18 an dem dem zweiten Bauteil 14 abgewandten Ende seiner äußeren Mantelfläche 60 eine Auskragung 62 auf. Es versteht sich, dass die Auskragung 62 auch an anderer Stelle der äußeren Mantelfläche 60 ausgebildet sein kann, insbesondere an dem dem zweiten Bauteil 14 zugewandten Ende des Stellelements 18. An der Auskragung 62 ist ein Angriffsmerkmal 64 für ein nicht dargestelltes Werkzeug vorgesehen, hier in Form einer senkrecht zur Gewindeachse A orientierten Außenkontur der Auskragung 62, die ein regelmäßiges n-Eck mit n Ecken 66 beschreibt, wobei n eine natürliche ganze Zahl ist. Bevorzugt ist n=6, so dass die Außenkontur der Auskragung 62 ein Sechseck darstellt. Vorzugsweise ist die Außenkontur der Auskragung 62 komplementär zum Innenprofil eines nicht dargestellten Schraubenschlüssels ausgebildet. Stehen das Innenprofil des Schraubenschlüssels und die Auskragung 62 in Eingriff, kann durch Verdrehung des Schraubenschlüssels um die Gewindeachse A herum die Position des Stellelements 18 relativ zu dem Grundelement 16 verstellt werden. Somit lässt sich die Position des vom Stellelement 18 aufgenommenen ersten Bauteils 12 relativ zu dem zweiten Bauteil 14, an dem das Grundelement 16 befestigt ist, einstellen.

Im Bereich ihrer Ecken 66 springt die Auskragung 62 axial in Richtung des zweiten Bauteils 14 vor. Axial zur Auskragung 62 beabstandet sind außerdem radial nach außen vorspringende Gegenlager 68 an der äußeren Mantelfläche 60 des Stellelements 18 ausgebildet. Zusammen mit den axial vorspringenden Ecken 66 der Auskragung 62 bilden die Gegenlager 68 eine axiale Fixierung für das erste Bauteil 12 an dem Stellelement 18, indem die vorspringenden Ecken 66 und die Gegenlager 68 kraftschlüssig mit der Wandung 22 des von dem ersten Bauteil 12 hervorstehenden Teils 24 in Eingriff stehen (Fig. 2 und 3).

Zur radialen Fixierung des ersten Bauteils 12 an dem Stellelement 18 sind zwischen der Auskragung 62 und den Gegenlagern 68 Federelemente 70 vorgesehen. Die Federelemente 70 weisen bezüglich der Aussparung 20 des ersten Bauteils 12 ein Übermaß auf, so dass die Federelemente 70 im zusammengebauten Zustand der Vorrichtung kraftschlüssig gegen die Innenseite der die Aussparung 20 definierenden Wandung 22 drücken.

Die axiale sowie radiale Fixierung des ersten Bauteils 12 an dem Stellelement 18 stellt somit eine spielfreie Aufnahme des ersten Bauteils 12 durch das Stellelement 18 sicher.

In Fig. 8 ist eine Variante des Stellelements 18 von Fig. 7 dargestellt, bei der ein dem zweiten Bauteil 14 abgewandter Endabschnitt der äußeren Mantelfläche 60 selbst als Angriffsmerkmal 64 ausgebildet ist. Von einem dem zweiten Bauteil 14 zugewandten Ende des Angriffsmerkmals 64 erstrecken sich flügelartige, federnde Vorsprünge 72 von der äußeren Mantelfläche 60 radial nach außen.

Überdies sind an der äußeren Mantelfläche 60 axiale Rippen 74 vorgesehen, die radial nach außen vorspringende Gegenlager 68 ausbilden. Die Vorsprünge 72 und die axialen Rippen 74 sind in Umfangsrichtung gesehen gleichverteilt an der äußeren Mantelfläche 60 angeordnet. Wie Fig. 8 zeigt, braucht nicht notwendigerweise die gleiche Anzahl von Vorsprüngen 72 und axialen Rippen 74 vorgesehen zu sein. Konkret weist das hier dargestellte Stellelement 18 drei Vorsprünge 72 und sechs axiale Rippen 74 auf. Es versteht sich, dass die Vorsprünge 72 und die axialen Rippen 74 auch an einer anderen als der beschriebenen Stelle an der äu-ßeren Mantelfläche 60 angeordnet sein können, beispielsweise an dem dem zweiten Bauteil 14 zugewandten Ende des Stellelements 18.

Ähnlich wie bei der bereits beschriebenen Variante des Stellelements 18 von Fig. 7, dienen die Vorsprünge 72 und die Gegenlager 68 zur axialen Fixierung des ersten Bauteils 12 an dem Stellelement 18, indem die Vorsprünge 72 und die Gegenlager 68 im zusammengebauten Zustand der Vorrichtung kraftschlüssig mit der die Aussparung 20 definierenden Wandung 22 an dem ersten Bauteil 12 in Eingriff stehen. Um die axiale Fixierung des ersten Bauteils 12 an dem Stellelement 18 zu begünstigen, sind die Vorsprünge 72 leicht in Richtung der Gegenlager 68 geneigt.

Die axialen Rippen 74 weisen bezüglich der Aussparung 20 des ersten Bauteils 12 ein Übermaß auf, so dass die axialen Rippen 74, ähnlich wie die Federelemente 70 der in Fig. 7 dargestellten Variante des Stellelements 18, dazu dienen, im zusammengebauten Zustand der Vorrichtung kraftschlüssig gegen die Innenseite der die Aussparung 20 definierende Wandung 22 zu drücken und somit das erste Bauteil 12 an dem Stellelement 18 radial zu fixieren.

Um das Einführen des Stellelements 18 in die Aussparung 20 zu erleichtern, verjüngen sich die Gegenlager 68 sowohl der in Fig. 7 dargestellten Ausführungsform als auch der in Fig. 8 gezeigten Variante dieser Ausführungsform in Richtung des Endes des Stellelements 18, das dem Angriffsmerkmal 64 abgewandt ist.

Die axiale und radiale Fixierung des ersten Bauteils 12 an dem Stellelement 18 bewirkt, dass das erste Bauteil 12 weitgehend unempfindlich gegenüber äußeren physikalischen Einflüssen, wie beispielsweise Vibrationen oder Temperaturschwankungen, an dem Stellelement 18 gelagert ist.

Fig. 9 zeigt eine partielle Explosionsdarstellung einer zweiten Ausführungsform der Vorrichtung, die sich von der voranstehend beschriebenen ersten Ausführungsform lediglich darin unterscheidet, dass sich an dem dem zweiten Bauteil 14 zugewandten Ende des Grundelements 16 eine radial nach außen kragende ringförmige Verbreiterung 76 anschließt, von der sich ein Fortsatz 78 des Grundelements 16 axial in Richtung des zweiten Bauteils 14 erstreckt. Der Fortsatz 78 wird von einer Öffnung 80 des zweiten Bauteils 14 aufgenommen, so dass das Grundelement 16 direkt, das heißt ohne Verwendung eines Sockels 36, an dem zweiten Bauteil 14 angebracht werden kann, wobei die dem zweiten Bauteil 14 zugewandte Seite der ringförmigen Verbreiterung 76 als Auflage auf dem zweiten Bauteil 14 dient. Die dem zweiten Bauteil 14 abgewandte Seite der ringförmigen Verbreiterung 76 erfüllt außerdem die Funktion eines Eindrehschutzes 46 für das Stellelement 18. Auf der dem Grundelement 16 abgewandten Seite des zweiten Bauteils 14 erstreckt sich ein Innengewindeabschnitt 82 von der Öffnung 80 weg, welcher einstückig mit dem zweiten Bauteil 14 ausgebildet ist und zur Aufnahme des Verbindungsmittels 30 dient. Die Fixierung des Grundelements 16 an dem zweiten Bauteil 14 mit Hilfe des Verbindungsmittels 30 erfolgt bei dieser Ausführungsform in analoger Weise zu der oben beschriebenen Befestigung des Grundelements 16 an dem Sockel 36.

Um das Grundelement 16 rotationsfest mit dem zweiten Bauteil 14 zu verbinden, weist der Fortsatz 78 des Grundelements 16 eine unrunde Außenkontur und die Öffnung 80 eine dazu komplementäre unrunde Innenkontur auf, so dass der Fortsatz 78 und die Öffnung 80 im zusammengebauten Zustand der Vorrichtung formschlüssig in Eingriff stehen. Beispielsweise kann die unrunde Außenkontur des Fortsatzes 78 und die unrunde Innenkontur der Öffnung 80 die Form eines regelmäßigen Polygons, zum Beispiel eines im Wesentlichen gleichseitigen Hexagons, annehmen.

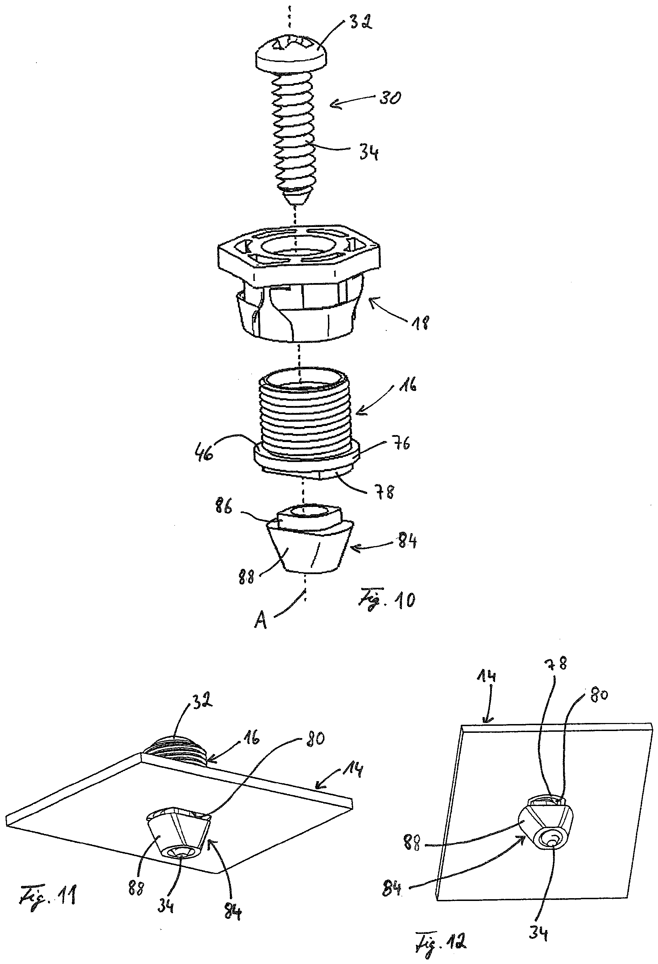

In Fig. 10 ist eine Explosionsdarstellung einer dritten Ausführungsform der Vorrichtung dargestellt, die sich von der zweiten Ausführungsform darin unterscheidet, dass die unrunde Außenkontur des Fortsatzes 78 bezüglich der Gewindeachse A eine C₂-Symmetrie besitzt, das heißt, dass die unrunde Außenkontur durch eine Rotation um 180° um die Gewindeachse A in sich selbst überführt werden kann. Die Öffnung 80 weist eine komplementäre unrunde Innenkontur auf. Ferner unterscheidet sich die dritte Ausführungsform von der zweiten Ausführungsform darin, dass der Innengewindeabschnitt 82 als ein zu dem zweiten Bauteil 14 separates Gegenstück 84 ausgebildet ist, wobei das Gegenstück 84 beispielsweise ein Nutenstein sein kann. Das Gegenstück 84 weist ebenfalls eine senkrecht zur Gewindeachse A orientierte unrunde Außenkontur auf, die im Wesentlichen der unrunden Innenkontur der Öffnung 80 entspricht, so dass das Gegenstück 84 durch die Öffnung 80 hindurch durchgeführt werden kann. Das Gegenstück 84 umfasst überdies einen ersten Abschnitt 86, der dem Grundelement 16 zugewandt ist und einen zweiten Abschnitt 88, der dem Grundelement 16 abgewandt ist, wobei der erste Abschnitt 86 gegenüber dem zweiten Abschnitt 88 radial nach innen versetzt ist, so dass der erste Abschnitt 86 in der Öffnung 80 um die Gewindeachse A frei drehbar ist, während der zweite Abschnitt 88 mit der der Vorrichtung abgewandten Rückseite des zweiten Bauteils 14 in Eingriff gebracht werden kann (Fig. 12).

Fig. 11 und 12 zeigen, wie gemäß der dritten Ausführungsform die Anbringung des Grundelements 16 an dem zweiten Bauteil 14 erfolgt. Dabei sind in Fig. 11 und 12 zur besseren Veranschaulichung das Stellelement 18 und das erste Bauteil 12 nicht dargestellt. Zunächst wird das das Grundelement 16 und Stellelement 18 tragende Verbindungsmittel 30 teilweise in das Gegenstück 84 eingedreht. Anschließend wird das Gegenstück 84 durch die Öffnung 80 hindurchgeführt, bis die ringförmige Verbreiterung 76 des Grundelements 16 an einer Vorderseite des zweiten Bauteils 14 anliegt, die der Vorrichtung zugewandt ist. Zum besseren Einführen des Gegenstücks 84 in die Öffnung 80 kann sich der zweite Abschnitt 88 zu dem der Vorrichtung abgewandten Ende hin verjüngen.

Nach dem Durchführen des Gegenstücks 84 durch die Öffnung 80 wird das Gegenstück 84 um die Gewindeachse A derart verdreht, dass das Gegenstück 84 quer zur Öffnung 80 steht.

Durch anschließendes Anziehen des Verbindungsmittels 30 sperrt das Gegenstück 84 gegen die Rückseite des zweiten Bauteils 14, wodurch die Vorrichtung an dem zweiten Bauteil 14 befestigt wird. Es versteht sich, dass der Fortsatz 78, die Öffnung 80 und das Gegenstück 84 andere geeignete Konturen besitzen können, die es erlauben, dass das Gegenstück 84 an der der Vorrichtung abgewandten Rückseite des zweiten Bauteils 14 anliegen kann.

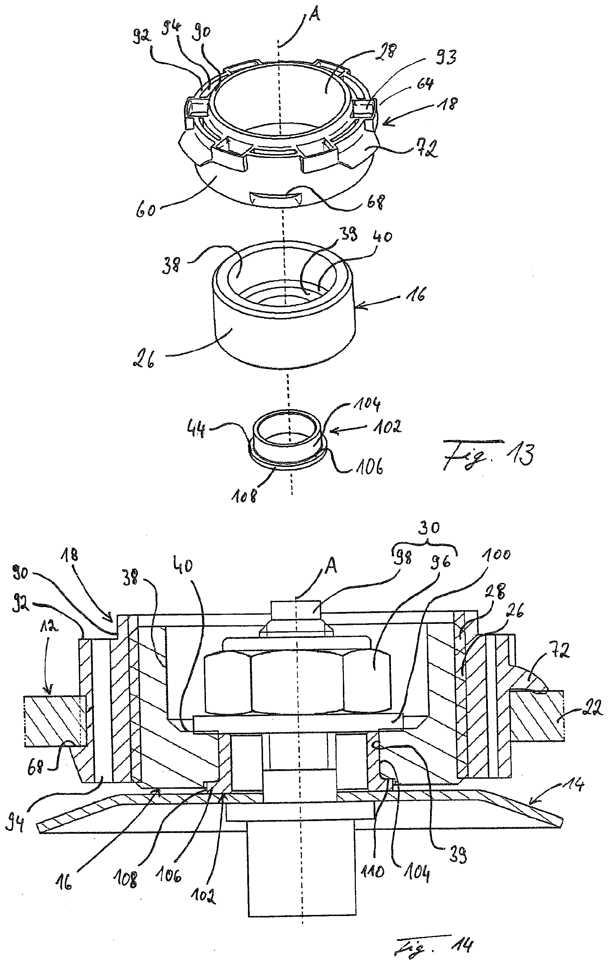

Fig. 13 und 14 zeigen eine vierte Ausführungsform der Vorrichtung. In Fig. 13 ist eine Explosionsdarstellung der vierten Ausführungsform dargestellt, wobei zur besseren Veranschaulichung das erste Bauteil 12 und das zweite Bauteil 14 nicht abgebildet sind. Fig. 14 zeigt die zusammengebaute Vorrichtung gemäß der vierten Ausführungsform in einer Teilschnittansicht.

Das Stellelement 18 gemäß der vierten Ausführungsform umfasst eine Wand, die aus einem inneren Hohlzylinder 90 und einem dazu radial nach außen beabstandeten äußeren Hohlzylinder 92 besteht, wobei die beiden Hohlzylinder 90,92 die Gewindeachse A koaxial umgeben. Die Außenseite des äußeren Hohlzylinders 92 bildet eine äußere Mantelfläche 60 des Stellelements 18. An der äußeren Mantelfläche 60 sind flügelartige Vorsprünge 72 und Gegenlager 68 angeordnet. Die Vorsprünge 72 und Gegenlager 68 dienen zur axialen Fixierung des ersten Bauteils 12 an dem Stellelement 18, wie bereits vorstehend im Zusammenhang mit der in Fig. 8 dargestellten Variante des Stellelements 18 beschrieben wurde. An der Innenseite des inneren Hohlzylinders 90 ist ein Stellelementgewinde 28 ausgebildet, das dazu ausgelegt ist, im zusammengebauten Zustand der Vorrichtung mit einem Grundelementgewinde 26 des Grundelements 16 in Gewindeeingriff zu stehen. Durch Verdrehung des Stellelements 18 kann dessen Position relativ zu dem Grundelement 16 in Richtung der Gewindeachse A verstellt werden, wobei der Stellweg zwischen der vollständig eingedrehten und der vollständig ausgedrehten Position des Stellelements 18 vorzugsweise mindestens 4 mm beträgt.

Zur Verdrehung des Stellelements 18 sind im Bereich des dem zweiten Bauteil 14 abgewandten Endes des Stellelements 18 Angriffsmerkmale 64 in Form von mehreren, zueinander beabstandeten und in Umfangsrichtung verteilten, insbesondere gleichverteilten, Kavitäten 93 ausgebildet, die sich von der Außenseite des inneren Hohlzylinders 90 über den äußeren Hohlzylinder 92 hinweg radial nach außen erstrecken. Die offene Seite einer jeweiligen Kavität 93 weist von dem zweiten Bauteil 14 weg, wodurch die Kavitäten 93 zur Aufnahme von Zinken eines nicht dargestellten Kronenschlüssels zum Zweck der Verdrehung des Stellelements 18 dienen. Bei der in Fig. 13 dargestellten Ausführungsform sind sechs in Umfangsrichtung gleichverteilte Kavitäten 93 vorgesehen. Es ist jedoch möglich, dass die Anzahl und die Position der Kavitäten 93 variieren können.

Die die Kavitäten 93 umgebenden Begrenzungen verbinden den inneren Hohlzylinder 90 und den äußeren Hohlzylinder 92 derart miteinander, dass zwischen der Außenseite des inneren Hohlzylinders 90 und der Innenseite des äußeren Hohlzylinders 92 ein Spalt 94 vorliegt. Dadurch, dass der innere Hohlzylinder 90 und der äußere Hohlzylinder 92 folglich nur auf der dem zweiten Bauteil 14 abgewandten Seite des Stellelements 18 über die die Kavitäten 93 umgebenden Begrenzungen miteinander verbunden sind, kann der dem zweiten Bauteil 14 zugewandte Bereich des äußeren Hohlzylinders 92 radial und gegen eine Rückstellkraft federnd ausgelenkt werden, wodurch die Aufnahme des ersten Bauteils 12 durch das Stellelement 18 begünstigt wird. Die Rückstellkraft bewirkt zudem, dass im zusammengebauten Zustand der Vorrichtung die äußere Mantelfläche 60 des Stellelements 18 kraftschlüssig gegen die Wandung 22 der an dem ersten Bauteil 12 ausgebildeten Aussparung 20 drückt, so dass der äußere Hohlzylinder 92 als Federelement 70 dient und somit das erste Bauteil 12 radial fixiert.

Zur axialen Fixierung des ersten Bauteils 12 an dem Stellelement 18 sind an der äußeren Mantelfläche 60 flügelartige Vorsprünge 72 sowie dazu axial beabstandet Gegenlager 68 vorgesehen. In der in Fig. 13 dargestellten Ausführungsform umfasst das Stellelement 18 jeweils drei Vorsprünge 72 und drei Gegenlager 68. Die Vorsprünge 72 und die Gegenlager 68 sind in Umfangsrichtung gleichverteilt um die äußere Mantelfläche 60 angeordnet. Vorzugsweise sind die Vorsprünge 72 und die Gegenlager 68 in Umfangsrichtung abwechselnd angeordnet, d.h. die Vorsprünge 72 und die Gegenlager 68 sind um 60° zueinander versetzt angeordnet. Es versteht sich, dass die Anzahl der Vorsprünge 72 und der Gegenlager 68 sowie deren Position an der äußeren Mantelfläche 60 hiervon abweichen kann.

Ebenso wie das Grundelement 16 der ersten Ausführungsform umfasst das Grundelement 16 gemäß der vierten Ausführungsform an seiner Außenseite das Grundelementgewinde 26 (in Fig. 13 nicht dargestellt) und an seiner Innenseite einen Durchgang 38. Das Grundelementgewinde 26 steht im zusammengebauten Zustand der Vorrichtung mit dem Stellelementgewinde 28 in Gewindeeingriff (in Fig. 14 schematisch gezeigt). An der Innenseite des Durchgangs 38 ragt eine Verengung 39 radial nach innen, die an der dem zweiten Bauteil 14 abgewandten Seite eine Anschlagfläche 40 ausbildet. Anders als bei dem Grundelement 16 der ersten Ausführungsform ist die Verengung 39 im Bereich des dem zweiten Bauteil 14 zugewandten Endes des Grundelements 16 angeordnet.

Der Durchgang 38 ist derart dimensioniert, dass in seinem Inneren sowohl eine Schraubenmutter 96 sowie ein geeignetes, nicht dargestelltes, Werkzeug zum Verstellen der Schraubenmutter 96 aufgenommen werden können. Bevorzugt kann es sich bei der Schraubenmutter 96 um eine selbstsichernde Sechskantmutter handeln. Die Schraubenmutter 96 dient zusammen mit einem Gewindebolzen 98, der an dem zweiten Bauteil 14 ausgebildet ist, als Verbindungsmittel 30 zur Fixierung des Grundelements 16 an dem zweiten Bauteil 14, wobei gemäß der vierten Ausführungsform das Grundelement 16 indirekt über eine Buchse 102 an dem zweiten Bauteil 14 befestigt wird. Vorteilhafterweise ist die Buchse 102 aus einem härteren Material, beispielsweise Automatenstahl, gefertigt als das Grundelement 16.

Die Buchse 102 umfasst einen hohlzylinderförmigen Abschnitt 104, der formschlüssig in der Verengung 39 des Grundelements 16 aufgenommen ist, und einen sich von dem hohlzylindrischen Abschnitt 104 radial nach außen erstreckenden Flansch 106, der durch eine Flanschaußenseite 108 radial nach außen begrenzt ist. Der Flansch 106 ist im zusammengebauten Zustand der Vorrichtung in einem zu dem Flansch 106 komplementären Ausschnitt 110 auf der dem zweiten Bauteil 14 zugewandten Seite der Verengung 39 aufgenommen.

Die Flanschaußenseite 108 ist zur drehfesten Verbindung von Grundelement 18 und Buchse 102 bezüglich einer Rotation um die Gewindeachse A profiliert und steht mit einer komplementären Profilierung des Ausschnitts 110 formschlüssig in Eingriff. Bevorzugt ist die Profilierung der Flanschaußenseite 108 und des Ausschnitts 110 in Form von verteilten, insbesondere gleichverteilten, parallel zur Gewindeachse A verlaufenden Einkerbungen ausgebildet (in Fig. 13 nicht dargestellt). Es versteht sich, dass die Profilierung auch andersartig ausgebildet sein kann. Insbesondere ist es denkbar, dass ähnlich wie bei der ersten Ausführungsform auf der dem zweiten Bauteil 14 abgewandten Seite des Flansches 106 Erhöhungen und Vertiefungen 44 (in Fig. 13 nicht gezeigt) ausgebildet sind, die dazu dienen, mit komplementären Erhöhungen und Vertiefungen 42, die auf der dem zweiten Bauteil 14 zugewandten Seite des Ausschnitts 110 angeordnet sind, formschlüssig in Eingriff zu stehen.

Bezugnehmend auf Fig. 14 wird die Fixierung des Grundelements 16 an dem zweiten Bauteil 14 erläutert. Wie in Fig. 14 zu sehen ist, weist die Verengung 39 auf der dem zweiten Bauteil 14 abgewandten Seite gegenüber dem dem zweiten Bauteil 14 abgewandten Ende der Buchse 102 in Richtung der Gewindeachse A ein geringfügiges axiales Übermaß auf. Mit anderen Worten ist die Anschlagfläche 40 zu dem dem zweiten Bauteil 14 abgewandten Ende der Buchse 102 geringfügig axial beabstandet.

Zwischen der Schraubenmutter 96 und der Anschlagfläche 40 kann optional eine Zwischenlegscheibe 100 vorgesehen sein. Beim Zusammenbau wird durch Festziehen der Schraubenmutter 96 die Zwischenlegscheibe 100 zunächst gegen die Anschlagfläche 40 gepresst. Durch weiteres Festziehen der Schraubenmutter 96 kann sich die Zwischenlegscheibe 100 in das Material der Verengung 39 des Grundelements 16 einschneiden, bis die Zwischenlegscheibe 100 auf dem dem zweiten Bauteil 14 abgewandten Ende der Buchse 102 aufliegt. Es ist aber auch denkbar, dass die Zwischenlegscheibe 100 die Verengung 39 nicht einschneidet, sondern deformiert, insbesondere elastisch deformiert. Durch die Zwischenlegscheibe 100 wird die Verengung 39 des Grundelements 16 festgeklemmt und somit letztendlich das Grundelement 16 an dem zweiten Bauteil 14 fixiert. Auf Grund der Buchse 102 kann zum Festziehen der Schraubenmutter 96 ein schraubenspezifisches Anziehdrehmoment verwendet werden, um das Grundelement 16 an dem zweiten Bauteil 14 zu fixieren.

Im zusammengebauten Zustand der Vorrichtung fällt gemäß der in Fig. 14 dargestellten Ausführungsform die Gewindeachse A des Grundelements 16 und die Längsachse des Gewindebolzens 98 zusammen. In dieser Konfiguration ist die Buchse 102 konzentrisch um den Gewindebolzen 98 angeordnet. Die Buchse 102 kann aber auch den Gewindebolzen 98 exzentrisch umgeben, so dass die Gewindeachse A und die Längsachse des Gewindebolzens 98 parallel zueinander beabstandet sind. Über den Abstand zwischen der Gewindeachse A und der Längsachse des Gewindebolzens 98 ist ein radialer Stellweg definiert. Vorzugsweise ist ein radialer Stellweg von maximal 2 mm einstellbar. Demnach ist zusätzlich zum Verstellen der Position des ersten Bauteils 12 relativ zu dem zweiten Bauteil 14 in Richtung der Gewindeachse A eine Einstellung der Position des ersten Bauteils 12 relativ zu dem zweiten Bauteil 14 in einer zur Gewindeachse A senkrechten Ebene möglich.

### Bezugszeichenliste

- 12: erstes Bauteil
- 14: zweites Bauteil
- 16: Grundelement
- 18: Stellelement
- 20: Aussparung
- 22: Wandung
- 24: hervorstehender Teil
- 26: Grundelementgewinde
- 28: Stellelementgewinde
- 30: Verbindungsmittel
- 32: Kopf
- 34: Schaft
- 36: Sockel
- 38: Durchgang
- 39: Verengung
- 40: Anschlagfläche
- 42: Vertiefung und Erhöhung
- 44: Erhöhung und Vertiefung
- 46: Eindrehschutz
- 48: Ausdrehschutz
- 50: erste Kontur
- 52: zweite Kontur
- 54: radialer Überstand
- 56: Wanddicke
- 58: Wanddicke
- 60: äußere Mantelfläche
- 62: Auskragung
- 64: Angriffsmerkmal
- 66: Ecke
- 68: Gegenlager
- 70: Federelement
- 72: Vorsprung
- 74: axiale Rippe
- 76: Verbreiterung
- 78: Fortsatz
- 80: Öffnung
- 82: Innengewindeabschnitt
- 84: Gegenstück
- 86: erster Abschnitt
- 88: zweiter Abschnitt
- 90: innerer Hohlzylinder
- 92: äußerer Hohlzylinder
- 93: Kavität
- 94: Spalt
- 96: Schraubenmutter
- 98: Gewindebolzen
- 100: Zwischenlegscheibe
- 102: Buchse
- 104: hohlzylinderförmiger Abschnitt
- 106: Flansch
- 108: Flanschaußenseite
- 110: Ausschnitt
- A: Gewindeachse
- B: Achse
- C: Achse

## Patentansprüche

1. Vorrichtung zur Anbringung eines ersten Bauteils (12) an einem zweiten Bauteil (14), umfassend:
ein Grundelement (16), welches ein Gewinde aufweist, das eine Gewindeachse (A) definiert,
ein Verbindungsmittel (30) zur direkten oder indirekten form- und/oder stoffschlüssigen Verbindung des Grundelements (16) mit dem zweiten Bauteil (14) und
ein Stellelement, welches mit dem Grundelement (12) in Gewindeeingriff steht, wobei
das Stellelement (18) dazu ausgebildet ist, das erste Bauteil (12) aufzunehmen, um durch Aufnahme des ersten Bauteils (12) mit dem ersten Bauteil (12) eine bauliche Einheit zu bilden, so dass die Position des ersten Bauteils (12) relativ zu dem zweiten Bauteil (14) in Richtung der Gewindeachse (A) gesehen durch eine Verdrehung des Stellelements (18) relativ zu dem Grundelement (16) verstellbar ist,
wobei das Grundelement (16) und/oder das Stellelement (18) zumindest teilweise derart elastisch verformbar ausgebildet sind/ist, dass das Stellelement (18) das erste Bauteil (12) spielfrei aufnehmen kann und mit dem Grundelement (16) spielfrei in Gewindeeingriff steht.

2. Vorrichtung nach Anspruch 1,
**dadurch gekennzeichnet, dass**
der Gewindeeingriff zwischen Grundelement (16) und Stellelement (18) selbsthemmend ist.

3. Vorrichtung nach Anspruch 1 oder 2,
**dadurch gekennzeichnet, dass**
das Grundelement (16) ein Grundelementgewinde (26) und das Stellelement (18) ein Stellelementgewinde (28) umfassen, wobei das Grundelementgewinde (26) und das Stellelementgewinde (28) für einen gegenseitigen Gewindeeingriff ausgelegt sind und wobei im nicht zusammengebauten Zustand der Vorrichtung das Grundelementgewinde (26) im Querschnitt gesehen eine erste Kontur (50) und das Stellelementgewinde (28) im Querschnitt gesehen eine zweite Kontur (52) aufweist, die von der ersten Kontur (50) derart verschieden ist, dass bei konzentrischer Ausrichtung der Konturen (50,52) mindestens ein radialer Überstand (54) zwischen diesen vorliegt.

4. Vorrichtung nach Anspruch 3,
**dadurch gekennzeichnet, dass**
eine der Konturen (50,52) im nicht zusammengebauten Zustand der Vorrichtung nichtkreisförmig, insbesondere oval oder ellipsenähnlich, ist und einen ersten Umfang definiert und die jeweilige andere Kontur (52,50) im Wesentlichen kreisförmig ist und einen zweiten Umfang definiert.

5. Vorrichtung nach Anspruch 4,
**dadurch gekennzeichnet, dass**
eine Differenz zwischen dem ersten Umfang und dem zweiten Umfang zumindest annähernd Null ist.

6. Vorrichtung nach zumindest einem der Ansprüche 3 bis 5,
**dadurch gekennzeichnet, dass**
im nicht zusammengebauten Zustand der Vorrichtung das Grundelementgewinde (26) eine nichtkreisförmige Kontur (50) aufweist und das Stellelementgewinde (28) eine kreisförmige Kontur (52) aufweist und derart verformbar, insbesondere elastisch verformbar, ausgebildet ist, dass sich die Kontur (52) des Stellelementgewindes (28) im zusammengebauten Zustand der Vorrichtung an die Kontur (50) des Grundelementgewindes (26) anpasst.

7. Vorrichtung nach zumindest einem der vorstehenden Ansprüche,
**dadurch gekennzeichnet, dass**
zumindest ein Angriffsmerkmal (64), insbesondere für ein Werkzeug, an dem Stellelement (18) vorgesehen ist.

8. Vorrichtung nach zumindest einem der vorstehenden Ansprüche,
**dadurch gekennzeichnet, dass**
mindestens ein Mittel zur form- und/oder kraftschlüssigen Fixierung des ersten Bauteils (12) an dem Stellelement (18) vorgesehen ist.

9. Vorrichtung nach zumindest einem der vorstehenden Ansprüche,
**dadurch gekennzeichnet, dass**
das Stellelement (18) mindestens eine radial nach außen vorspringende Auskragung (62) und mindestens ein radial nach außen vorspringendes Gegenlager (68) aufweist, wobei die mindestens eine Auskragung (62) und das mindestens eine Gegenlager (68) in Richtung der Gewindeachse (A) mit einem Abstand zueinander angeordnet sind, um das erste Bauteil (12) zumindest annähernd formschlüssig zwischen sich aufzunehmen, und/oder wenigstens ein Federelement (70) an dem Stellelement (18) vorgesehen ist, welches durch das aufgenommene erste Bauteil (12) in radialer Richtung entgegen seiner Rückstellkraft verformbar ist, und/oder mehrere Auskragungen (62) und/oder mehrere Gegenlager (68) und/oder mehrere Federelemente (70) jeweils in Umfangsrichtung um das Stellelement (18) herum verteilt, insbesondere gleichverteilt, angeordnet sind.

10. Vorrichtung nach zumindest einem der vorstehenden Ansprüche,
**gekennzeichnet durch**
einen Sockel (36), welcher an dem zweiten Bauteil (14) montierbar ist und mit dem Grundelement (16) formschlüssig in Eingriff bringbar ist, insbesondere wobei der Sockel (36) eine dem Grundelement (16) zugewandte Stirnfläche umfasst, an welcher wenigstens eine Erhöhung oder Vertiefung (44) ausgebildet ist, und das Grundelement (16) an einer Verengung (39) eines Durchgangs (38) eine dem Sockel (36) zugewandte Fläche aufweist, an welcher wenigstens eine korrespondierende Vertiefung oder Erhöhung (42) ausgebildet ist; oder
ein zweites Bauteil (14) mit einem Sockel (36), welcher einstückig mit dem zweiten Bauteil (14) ausgebildet ist und welcher mit dem Grundelement (16) formschlüssig in Eingriff bringbar ist, insbesondere wobei der Sockel (36) eine dem Grundelement (16) zugewandte Stirnfläche umfasst, an welcher wenigstens eine Erhöhung oder Vertiefung (44) ausgebildet ist, und das Grundelement (16) an einer Verengung (39) eines Durchgangs (38) eine dem Sockel (36) zugewandte Fläche aufweist, an welcher wenigstens eine korrespondierende Vertiefung oder Erhöhung (42) ausgebildet ist.

11. Vorrichtung nach einem der vorstehenden Ansprüche,
**gekennzeichnet durch**
ein Verbindungsmittel (30) zur Verbindung des Grundelements (16) mit dem zweiten Bauteil (14) oder einem daran montierten Sockel (36), das einen Kopf (32) und einen Schaft (34) umfasst, wobei das Grundelement (16) und gegebenenfalls der Sockel (36) einen sich in Richtung der Gewindeachse (A) erstreckenden Durchgang (38) zur Aufnahme des Schafts (34) aufweisen und wobei eine Verengung (39) radial nach innen in den Durchgang (38) ragt, an deren dem Sockel (36) abgewandten Seite eine Anschlagfläche (40) für den Kopf (32) des Verbindungsmittels (30) ausgebildet ist.

12. Vorrichtung nach zumindest einem der Ansprüche 1 bis 9,
**dadurch gekennzeichnet, dass**
das Grundelement (16) an seinem dem zweiten Bauteil (14) zugewandten Ende einen unrunden Fortsatz (78) ausbildet und das zweite Bauteil (14) eine entsprechend geformte Öffnung (80) aufweist, in welche der unrunde Fortsatz (78) des Grundelements (16) einsetzbar ist.

13. Vorrichtung nach zumindest einem der Ansprüche 1 bis 9,
**dadurch gekennzeichnet, dass**
die Vorrichtung ein zweites Bauteil (14) umfasst, wobei zur Verbindung des Grundelements (16) mit dem zweiten Bauteil (14) ein Gewindebolzen (98) an dem zweiten Bauteil (14) ausgebildet und eine auf dem Gewindebolzen (98) aufschraubbare Schraubenmutter (96) vorgesehen ist, und wobei
das Grundelement (16) einen sich in Richtung der Gewindeachse (A) erstreckenden Durchgang (38) zur Aufnahme der Schraubenmutter (96) aufweist und in den Durchgang (38) eine Verengung (39) radial nach innen ragt, die zur Aufnahme des Gewindebolzens (98) dient, so dass die Verengung (39) im zusammengebauten Zustand der Vorrichtung zwischen der Schraubenmutter (96) und dem zweiten Bauteil (14) einspannbar ist.

14. Vorrichtung nach Anspruch 13,
**gekennzeichnet durch**
eine Buchse (102), die zwischen der Verengung (39) und dem Gewindebolzen (98) angeordnet ist und einen dem zweiten Bauteil (14) zugewandten Flansch (106) aufweist, der durch eine Flanschaußenseite (108) radial nach außen begrenzt ist, wobei die Flanschaußenseite (108) profiliert ist und mit einem komplementär profilierten Ausschnitt (110) in der Verengung (39) formschlüssig in Eingriff steht, um das Grundelement (16) drehfest an dem zweiten Bauteil (14) zu fixieren.

15. Vorrichtung nach zumindest einem der vorstehenden Ansprüche,
**dadurch gekennzeichnet, dass**
das Stellelement (18) einen inneren Hohlzylinder (90) und einen äußeren Hohlzylinder (92) umfasst, welche die Gewindeachse (A) koaxial umgeben, wobei der innere Hohlzylinder (90) und der äußere Hohlzylinder (92) durch Angriffsmerkmale (64) radial auf Abstand gehalten sind.

## Claims

1. An apparatus for attaching a first component (12) to a second component (14), the apparatus comprising:
a base element (16) which has a thread which defines a thread axis (A);
a connection means (30) for a direct or indirect form-fitting and/or bonded connection of the base element (16) to the second component (14); and
an adjustment element which is in threaded engagement with the base element (12),
wherein the adjustment element (18) is configured to receive the first component (12) in order to form a construction unit with the first component (12) by receiving the first component (12) such that the position of the first component (12) is adjustable relative to the second component (14), viewed in the direction of the thread axis (A), by a rotation of the adjustment element (18) relative to the base element (16),
wherein the base element (16) and/or the adjustment element (18) is/are at least partly elastically deformable such that the adjustment element (18) can receive the first component (12) free of clearance and is in threaded engagement free of clearance with the base element (16).

2. An apparatus in accordance with claim 1,
**characterized in that**
the threaded engagement between the base element (16) and the adjustment element (18) is self-locking.

3. An apparatus in accordance with claim 1 or claim 2,
**characterized in that**
the base element (16) comprises a base element thread (26) and the adjustment element (18) comprises an adjustment element thread (28), with the base element thread (26) and the adjustment element thread (28) being adapted for a mutual threaded engagement, and with the base element thread (26), in the non-assembled state of the apparatus, having a first contour (50) viewed in cross-section and the adjustment element thread (28) having a second contour (52) viewed in cross-section which is different from the first contour (50) such that, on a concentric alignment of the contours (50, 52), there is at least a radial overhang (54) between them.

4. An apparatus in accordance with claim 3,
**characterized in that**,
in the non-assembled state of the apparatus, one of the contours (50, 52) is non-circular, in particular oval or ellipse-like, and defines a first periphery and the respective other contour (52, 50) is substantially circular and defines a second periphery.

5. An apparatus in accordance with claim 4,
**characterized in that**
a difference between the first periphery and the second periphery is at least approximately zero.

6. An apparatus in accordance with at least one of the claims 3 to 5,
**characterized in that**,
in the non-assembled state of the apparatus, the base element thread (26) has a non-circular contour (50) and the adjustment element thread (28) has a circular contour (52) and is deformable, in particular elastically deformable, such that the contour (52) of the adjustment element thread (28) adapts to the contour (50) of the base element thread (26) in the assembled state of the apparatus.

7. An apparatus in accordance with at least one of the preceding claims,
**characterized in that**
at least one engagement feature (64), in particular for a tool, is provided at the adjustment element (18).

8. An apparatus in accordance with at least one of the preceding claims,
**characterized in that**
at least one means is provided for the form-fitting and/or force-fitting fixing of the first component (12) to the adjustment element (18).

9. An apparatus in accordance with at least one of the preceding claims,
**characterized in that**
the adjustment element (18) has at least one radially outwardly projecting protrusion (62) and at least one radially outwardly projecting counter-bearing (68), with the at least one protrusion (62) and the at least one counter-bearing (68) being arranged with a spacing from one another in the direction of the thread axis (A) to receive the first component (12) between them in an at least approximately form-fitting manner; and/or
**in that** at least one spring element (70) is provided at the adjustment element (18) and is deformable in the radial direction against its return force by the received first component (12); and/or
**in that** a plurality of protrusions (62) and/or a plurality of counter-bearings (68) and/or a plurality of spring elements (70) are each arranged distributed, in particular evenly distributed, about the adjustment element (18) in the peripheral direction.

10. An apparatus in accordance with at least one of the preceding claims,
**characterized by**
a holder (36) which is mountable to the second component (14) and which can be brought into engagement in a form-fitting manner with the base element (16), in particular with the holder (36) comprising an end face which faces the base element (16) and at which at least one elevated portion or recess (44) is formed and the base element (16) having, at a constriction (39) of a passage (38), a surface which faces the holder (36) and at which at least one corresponding recess or elevated portion (42) is formed; or
a second component (14) having a holder (36) which is formed in one piece with the second component (14) and which can be brought into engagement in a form-fitting manner with the base element (16), in particular with the holder (36) comprising an end face which faces the base element (16) and at which at least one elevated portion or recess (44) is formed and the base element (16) having, at a constriction (39) of a passage (38), a surface which faces the holder (36) and at which at least one corresponding recess or elevated portion (42) is formed.

11. An apparatus in accordance with any one of the preceding claims,
**characterized by**
a connection means (30) for connecting the base element (16) to the second component (14) or to a holder (36) which is mounted thereto and which comprises a head (32) and a shaft (34), with the base element (16) and, optionally, the holder (36) having a passage (38) extending in the direction of the thread axis (A) for receiving the shaft (34), and with a constriction (39) projecting radially inwardly into the passage (38) and an abutment surface (40) for the head (32) of the connection means (30) being formed at the side of said constriction (39) remote from the holder (36).

12. An apparatus in accordance with at least one of the claims 1 to 9,
**characterized in that**
the base element (16) forms a non-round continuation (78) at its end facing the second component (14) and the second component (14) has a correspondingly shaped opening (80) into which the non-round continuation (78) of the base element (16) can be inserted.

13. An apparatus in accordance with at least one of the claims 1 to 9,
**characterized in that**
the apparatus comprises a second component (14), wherein,
to connect the base element (16) to the second component (14), a threaded bolt (98) is formed at the second component (14) and a screw nut (96) is provided which can be screwed on the threaded bolt (98), and wherein the base element (16) has a passage (38) extending in the direction of the thread axis (A) for receiving the screw nut (96) and a constriction (39) projects radially inwardly into the passage (38) and serves to receive the threaded bolt (98) such that the constriction (39) can be clamped between the screw nut (96) and the second component (14) in the assembled state of the apparatus.

14. An apparatus in accordance with claim 13,
**characterized by**
a bush (102) which is arranged between the constriction (39) and the threaded bolt (98) and which has a flange (106) which faces the second component (14) and which is radially outwardly bounded by an outer flange side (108), with the outer flange side (108) being profiled and being in engagement in a form-fitting manner with a complementarily profiled portion (110) in the constriction (39) to fix the base element (16) rotationally fixedly to the second component (14).

15. An apparatus in accordance with at least one of the preceding claims,
**characterized in that**
the adjustment element (18) comprises an inner hollow cylinder (90) and an outer hollow cylinder (92) which coaxially surround the thread axis (A), with the inner hollow cylinder (90) and the outer hollow cylinder (92) being held radially at a distance by engagement features (64).

## Revendications

1. Dispositif pour monter un premier composant (12) sur un second composant (14), comprenant :
un élément de base (16) qui présente un filetage définissant un axe de filetage (A),
un moyen de liaison (30) pour la liaison directe ou indirecte par coopération de forme et/ou de matière de l'élément de base (16) avec le second composant (14), et
un élément de réglage (18) qui est en engagement par filetage avec l'élément de base (16),
l'élément de réglage (18) étant réalisé pour recevoir le premier composant (12) afin de former, par réception du premier composant (12), une unité structurelle avec le premier composant (12), de sorte que la position du premier composant (12) par rapport au second composant (14), vu dans la direction de l'axe de filetage (A), peut être réglée par une rotation de l'élément de réglage (18) par rapport à l'élément de base (16),
l'élément de base (16) et/ou l'élément de réglage (18) étant réalisé(s) au moins partiellement de manière déformable élastiquement de telle sorte que l'élément de réglage (18) peut recevoir sans jeu le premier composant (12) et est en engagement par filetage sans jeu avec l'élément de base (16).

2. Dispositif selon la revendication 1,
**caractérisé en ce que**
l'engagement par filetage entre l'élément de base (16) et l'élément de réglage (18) est autobloquant.

3. Dispositif selon la revendication 1 ou 2,
**caractérisé en ce que**
l'élément de base (16) comprend un filetage d'élément de base (26) et l'élément de réglage (18) comprend un filetage d'élément de réglage (28), le filetage d'élément de base (26) et le filetage d'élément de réglage (28) étant conçus pour un engagement par filetage mutuel, et
à l'état non assemblé du dispositif, le filetage d'élément de base (26), vu en coupe transversale, présente un premier contour (50), et le filetage d'élément de réglage (28), vu en coupe transversale, présente un second contour (52) qui est différent du premier contour (50) de telle sorte que, lors d'une orientation concentrique des contours (50, 52), il existe au moins un porte-à-faux radial (54) entre ceux-ci.

4. Dispositif selon la revendication 3,
**caractérisé en ce que**
à l'état non assemblé du dispositif, l'un des contours (50, 52) est non circulaire, en particulier ovale ou elliptique, et définit un premier pourtour, et l'autre contour respectif (52, 50) est sensiblement circulaire et définit un second pourtour.

5. Dispositif selon la revendication 4,
**caractérisé en ce que**
une différence entre le premier pourtour et le second pourtour est au moins approximativement égale à zéro.

6. Dispositif selon l'une au moins des revendications 3 à 5,
**caractérisé en ce que**
à l'état non assemblé du dispositif, le filetage d'élément de base (26) présente un contour non circulaire (50), et le filetage d'élément de réglage (28) présente un contour circulaire (52) et est conçu de manière déformable, en particulier déformable élastiquement, de telle sorte que le contour (52) du filetage d'élément de réglage (28) s'adapte au contour (50) du filetage d'élément de base (26), à l'état assemblé du dispositif.

7. Dispositif selon l'une au moins des revendications précédentes,
**caractérisé en ce que**
au moins une caractéristique d'application (64), en particulier pour un outil, est prévue sur l'élément de réglage (18).

8. Dispositif selon l'une au moins des revendications précédentes,
**caractérisé en ce que**
il est prévu au moins un moyen de fixation par coopération de forme et/ou de force du premier composant (12) sur l'élément de réglage (18).

9. Dispositif selon l'une au moins des revendications précédentes,
**caractérisé en ce que**
l'élément de réglage (18) présente au moins une excroissance (62) faisant saillie radialement vers l'extérieur et au moins un contre-appui (68) faisant saillie radialement vers l'extérieur, ladite au moins une excroissance (62) et ledit au moins un contre-appui (68) étant disposés à une certaine distance l'un de l'autre dans la direction de l'axe de filetage (A), afin de recevoir entre eux le premier composant (12) au moins approximativement par coopération de forme, et/ou
au moins un élément de ressort (70) est prévu sur l'élément de réglage (18), lequel peut être déformé dans la direction radiale à l'encontre de sa force de rappel par le premier composant (12) reçu, et/ou plusieurs excroissances (62) et/ou plusieurs contre-appuis (68) et/ou plusieurs éléments de ressort (70) sont chacun disposés en étant répartis, en particulier régulièrement, dans la direction périphérique autour de l'élément de réglage (18).

10. Dispositif selon l'une au moins des revendications précédentes,
**caractérisé par**
un socle (36) qui peut être monté sur le second composant (14) et être amené en engagement par coopération de forme avec l'élément de base (16), en particulier le socle (36) comprenant une surface frontale tournée vers l'élément de base (16), sur laquelle est formé au moins un bossage ou un creux (44), et l'élément de base (16) présente, au niveau d'un rétrécissement (39) d'un passage (38), une surface tournée vers le socle (36), sur laquelle est formé au moins un bossage ou creux correspondant (42) ; ou
par un second composant (14) ayant un socle (36) qui est réalisé d'un seul tenant avec le second composant (14) et peut être amené en engagement par coopération de forme avec l'élément de base (16), en particulier le socle (36) comprenant une surface frontale tournée vers l'élément de base (16), sur laquelle est formé au moins un bossage ou un creux (44), et l'élément de base (16) présente, au niveau d'un rétrécissement (39) d'un passage (38), une surface tournée vers le socle (36), sur laquelle est formé au moins creux ou bossage correspondant (42).

11. Dispositif selon l'une des revendications précédentes,
**caractérisé par**
un moyen de liaison (30) pour relier l'élément de base (16) au second composant (14) ou à un socle (36) monté sur celui-ci, qui comprend une tête (32) et une tige (34),
l'élément de base (16) et éventuellement le socle (36) présentant un passage (38) destiné à recevoir la tige (34) et s'étendant dans la direction de l'axe de filetage (A), et
un rétrécissement (39) faisant saillie radialement vers l'intérieur dans le passage (38), dont le côté détourné du socle (36) présente une surface de butée (40) pour la tête (32) du moyen de liaison (30).

12. Dispositif selon l'une au moins des revendications 1 à 9,
**caractérisé en ce que** l'élément de base (16) forme un prolongement non rond (78) à son extrémité tournée vers le second composant (14), et le second composant (14) présente une ouverture (80) de forme correspondante dans laquelle le prolongement non rond (78) de l'élément de base (16) peut être inséré.

13. Dispositif selon l'une au moins des revendications 1 à 9,
**caractérisé en ce que**
le dispositif comprend un second composant (14),
pour relier l'élément de base (16) au second composant (14), un boulon fileté (98) est formé sur le second composant (14), et il est prévu un écrou (96) pouvant être vissé sur le boulon fileté (98), et
l'élément de base (16) présente un passage (38) destiné à recevoir l'écrou (96) et s'étendant dans la direction de l'axe de filetage (A), et un rétrécissement (39) fait saillie radialement vers l'intérieur dans le passage (38), qui sert à recevoir le boulon fileté (98), de sorte que le rétrécissement (39) peut être serré entre l'écrou (96) et le second composant (14), à l'état assemblé du dispositif.

14. Dispositif selon la revendication 13,
**caractérisé par**
une douille (102) qui est disposée entre le rétrécissement (39) et le boulon fileté (98) et qui présente une bride (106) tournée vers le second composant (14), qui est délimitée radialement vers l'extérieur par une face extérieure de bride (108), la face extérieure de bride (108) étant profilée et étant en engagement par coopération de forme avec une découpe (110) profilée de manière complémentaire dans le rétrécissement (39), afin de fixer l'élément de base (16) solidairement en rotation sur le second composant (14).

15. Dispositif selon l'une au moins des revendications précédentes,
**caractérisé en ce que**
l'élément de réglage (18) comprend un cylindre creux intérieur (90) et un cylindre creux extérieur (92) qui entourent coaxialement l'axe de filetage (A), le cylindre creux intérieur (90) et le cylindre creux extérieur (92) étant maintenus radialement à distance par des caractéristiques d'application (64).
